# EUROPÄISCHE PATENTSCHRIFT

(11) **EP 2 927 171 B1**
(45) Veröffentlichungstag und Bekanntmachung des Hinweises auf die Patenterteilung: **14.06.2017**
(21) Anmeldenummer: 15000621.1
(22) Anmeldetag: 04.03.2015
(51) Int. Cl.: B65G 59/06

(54) **Vorrichtung zum Einbringen von Magneten**
Device for introducing magnets
Dispositif d'introduction d'aimants

(30) Priorität: 01.04.2014 DE 102014004717
(43) Veröffentlichungstag der Anmeldung: 07.10.2015
(73) Patentinhaber: Kolbus GmbH & Co. KG, 32369 Rahden (DE)
(72) Erfinder: Krumberg, Waldemar, D-59302 Oelde (DE)

(56) Entgegenhaltungen:
- EP-A1- 1 405 697
- DE-A1-102004 048 541
- DE-A1-102006 021 167
- US-A- 3 972 407
- US-A- 5 193 717

## Beschreibung

Die vorliegende Erfindung betrifft eine Vorrichtung zum Einbringen von Magneten in dafür vorgesehene Aufnahmepositionen von vorwiegend flächigen Materialzuschnitten gemäß des Oberbegriffes nach Anspruch 1.

Es existieren Vorrichtungen mit in mehreren Richtungen verfahrbaren Halteeinrichtungen, mit denen einzelne, in einer bekannten Position bereitgestellte Objekte aufgenommen und an anderer vorgegebener Position plaziert und abgesetzt werden. Solche Vorrichtungen sind unter dem Begriff Pick-and-Place Roboter in verschiedenen Ausführungen bekannt.

Aus der Veröffentlichung DE 10 2006 021167 A1, welche eine Vorrichtung zum Einbringen von Magneten nach dem Oberbegriff des Anspruchs 1 offenbart, ist ein automatischer Anleger für Gegenstände mit einem Stapelmagazin zur Aufnahme eines Vorrates der Anzulegenden Gegenständen und einer Einrichtung zur Entnahme jeweils eines Gegenstandes aus dem Stapelmagazin und zu dessen Verbringung in eine Bereitstellungsposition bekannt. Das Stapelmagazin ist schachtförmig durch vertikalen Führungsflächen begrenzt, welche den Stapel stabilisieren. Nach unten wird dieser Schacht von einem horizontal bewegbaren Schieber Abgeschlossen, der eine in seiner Größe dem zu vereinzelnden Gegenstand entsprechende Vertiefung aufweist. In einer ersten Position des Schiebers, fluchtet dessen Vertiefung mit dem oberhalb angeordneten Stapelschacht, so dass der zu vereinzelnde Gegenstand in dem Schieber aufgenommen wird. Durch die anschließende horizontale Bewegung des Schiebers wird der aufgenommene Gegenstand von dem Stapel getrennt und der Schacht nach unten abgeschlossen. In einer zweiten Position des Schiebers ist der von diesem aufgenommene Gegenstand von oben frei zugänglich und kann von einer Überführungseinrichtung übernommen werden.

Die Erfahrung zeigt, dass bei der Vereinzelung von Magneten mit einer solchen Vorrichtung der bereits vereinzelte Magnete von dem Maghetfeld des restlichen, aus einer Vielzahl von Einzelmagneten bestehenden Stapels aus der liegenden Orientierung innerhalb der Vertiefung des Schiebers unkontrolliert aufgerichtet oder gar vollständig aus der Vertiefung gezogen wird und an der Außenfläche des Stapelmagazins anhaftet.

Aus der Veröffentlichung DE 10 2004 048541 A2 sind Vorrichtungen bekannt, welche einen Magneten durch seitliches Abschieben von einem stangenförmigen Vorrat gleicher Magnete separieren. Dazu sind Führungen für die Vorratsstange vorgesehen, welche die dem zur Vereinzelung vorgesehenen endseitigen Magneten benachbarte Magnete positionieren. Aufgrund der innerhalb der Stange wirkenden magnetischen Kraft wird so auch der endseitige Magnet positioniert. Ein Schieber erfasst den endseitigen Magneten seitlich und separiert ihn durch seitliches Abschieben.

Die Vorratsstange erzeugt abhängig von den verwendeten Magneten ein magnetisches Feld von zum Teil derartiger Stärke, dass der abgeschobene Magnet vom Schieber zurück an die Vorratsstange springt. Zur Vermeidung dieses unerwünschten Effektes wird der vereinzelte Magnet so weit von der Vorratsstange entfernt, bis die auf den vereinzelten Magneten wirkende Trägheit und Haftreibung deutlich größer sind als die Magnetkraft zwischen dem vereinzelten Magneten und der Vorratsstange. Dazu ist ein
horizontaler Kanal vorgesehen, in welchem der Magnet mittels des zur Vereinzelung vorgesehenen Schiebers transportiert wird. Dieser Ansatz erfordert für sehr starke Magnete einen entsprechend großen Bauraum der Vereinzelungsvorrichtung.

In einer alternativen Ausführung geht dieser horizontale Kanal in eine Blattfeder über, an welcher der vereinzelte Magnet magnetisch anhaftet. Damit kann der Kanal selbst kürzer gestaltet sein. Die Blattfeder ist derart elastisch, dass die Anhaftung des Magneten bestehen bleibt, bis dieser in eine Ausnehmung des zu bestückenden Gutes verbracht ist. Dazu ist erforderlich, dass die den Magneten in der Ausnehmung haltenden Kräfte ausreichend größer sind als die zwischen Magnet und Blattfeder wirkende Magnetkraft.

Insbesondere bei höherer Vereinzelungsleistung und entsprechend großer Geschwindigkeit und Beschleunigung des Schiebers führt das Zusammenspiel von Magnetkraft, Reibung und Trägheit zu einer geringen Wiederholgenauigkeit der Bereitstellungsposition des vereinzelten Magneten. Soll diese Ungenauigkeit nicht auf die Positionierung des Magneten am Produkt übertragen werden, muss sie durch die Überführungseinrichtung korrigiert werden, wodurch diese deutlich komplexer und teurer wird.

Aufgabe der Erfindung ist es daher, eine gattungsgemäße Vorrichtung zur Verfügung zu stellen, welche die beschriebenen Nachteile der bekannten Vorrichtungen vermeidet.

Gelöst wird diese Aufgabe erfindungsgemäß durch eine Vorrichtung nach Anspruch 1, welche wenigstens eine Einrichtung zum Bevorraten von Magneten, eine Einrichtung zum Separieren einzelner Magnete aus dem Vorrat und einer Einrichtung zum Überführen der vereinzelten Magnete in eine Aufnahmeposition des vorwiegend flächigen Materialzuschnittes umfasst, wobei die Vereinzelungseinrichtung zumindest eine Deckplatte mit einer Durchlassöffnung für die Magnete und einen dieser Deckplatte unmittelbar benachbarten und zu dieser parallel beweglichen, nicht magnetischen Schlitten umfasst, der eine Ausnehmung zur Aufnahme eines Magneten enthält.

Ein ferromagnetisches Element ist der Deckplatte gegenüberliegend derart angeordnet, dass der Schlitten in dem durch die Deckplatte und den ferromagnetischen Element gebildeten Spalt fährt und das ferromagnetische Element in Bewegungsrichtung des Schlittens und zur Bereitstellungsposition (B) weisend in etwa mit der Deckplatte abschließt oder gegenüber dieser etwas übersteht. Dadurch wirkt auf den vereinzelten Magneten in der Bereitstellungsposition eine Magnetkraft, welche ihn auch bei leerem Magazin sicher an den sich öffnenden Seitenflächen der Ausnehmung anliegen lassen und somit zuverlässig und präzise positionieren. Das ermöglicht auf einfache Weise und in kompakter Bauform, automatisiert einen Magneten zu vereinzeln und einer Überführungseinrichtung wie einem Pick-and-Place Roboter bereit zu stellen.

In vorzugsweiser Ausgestaltung ist der Schlitten derart geführt und angetrieben, dass er eine Hin- und Herbewegung ausführt, wobei in einer ersten Endlage die den Magneten aufnehmende Ausnehmung des Schlittens der Durchlassöffnung in der Deckplatte gegenüberliegt, so dass der zu vereinzelnde Magnet von der Ausnehmung aufgenommen werden kann, und in einer zweiten Endlage die Ausnehmung die Bereitstellungsposition erreicht hat. So wird der vereinzelte Magnet von der Durchlassöffnung der Deckplatte bis zur Bereitstellungsposition sicher geführt, wodurch eine höhere Vereinzelungsleistung möglich wird.

In bevorzugter weiterer Ausgestaltung ist der Schlitten auf einem Träger montiert, welcher das ferromagnetische Element umfasst und welcher zumindest im Bereich der den Magneten aufnehmenden Ausnehmung ferromagnetisch ist, so dass der vereinzelte Magnet sicher in der Ausnehmung gehalten wird und damit größere Verzögerungen beim Erreichen der Bereitstellungsposition ohne Verlust des Magneten und damit eine höhere Vereinzelungsleistung möglich sind.

Vorzugsweise umfasst die den Magneten aufnehmende Ausnehmung zwei Seitenflächen, welche sich in Bewegungsrichtung des Schlittens während des Vereinzelns öffnend zueinander angeordnet sind. Aufgrund der zwischen dem sich in der Ausnehmung befindlichen Magneten und der Vorratsstange wirkenden magnetischen Kraft, legt sich so der in der Ausnehmung befindliche Magnet beim Vereinzeln zuverlässig an diesen Seitenflächen an, wodurch dessen Position sehr präzise festgelegt ist. Bevorzugt bilden diese beiden Seitenflächen ein "V", wodurch sich die Vorrichtung zur Verarbeitung scheibenförmiger runder Magnete unterschiedlicher Durchmesser in gleicher Weise eignet. In besonders einfacher Weise sind diese Seitenflächen im rechten Winkel zueinander angeordnet. Erfindungsgemäß umfasst die Vereinzelungseinrichtung ein der Durchlassöffnung in der Deckplatte gegenüberliegenden ferromagnetisches Element, derart angeordnet, dass sich der nichtmagnetische Schlitten zwischen der Durchlassöffnung und dem ferromagnetischen Element befindet. So wird auf einfache Weise das Nachfördern der Magnete aus dem Vorrat durch die Durchlassöffnung der Deckplatte bis auf den Schlitten sichergestellt.

In besonders einfacher Weise wird das ferromagnetische Element durch einen Balken gebildet.

Zur Überwachung der Vereinzelung sieht die Erfindung in weiterer Ausgestaltung einen Sensor vor, welcher den bereits vereinzelten Magneten erfasst. Vorzugsweise ist der Sensor im Bereich der Deckplatte angeordnet, um auf diese Weise die Einrichtung kompakt gestalten zu können.

Eine beispielhafte Ausführungsform der erfindungsgemäßen Vorrichtung wird anhand der Figuren detailliert beschrieben. Es zeigen:
- **Fig. 1**: eine auszugsweise, perspektivische Darstellung der Vorrichtung mit dem Schlitten in einer der Bereitstellungsposition entsprechenden Endlage;
- **Fig. 2**: eine Schnittdarstellung der Vereinzelungseinrichtung mit dem Schlitten in einer ersten Endlage;
- **Fig. 3**: eine Schnittdarstellung der Vereinzelungseinrichtung mit dem Schlitten in einer zweiten, der Bereitstellungsposition entsprechenden Endlage;
- **Fig. 4**: eine Draufsicht des Schlittens mit einem in der Ausnehmung befindlichen Magneten.

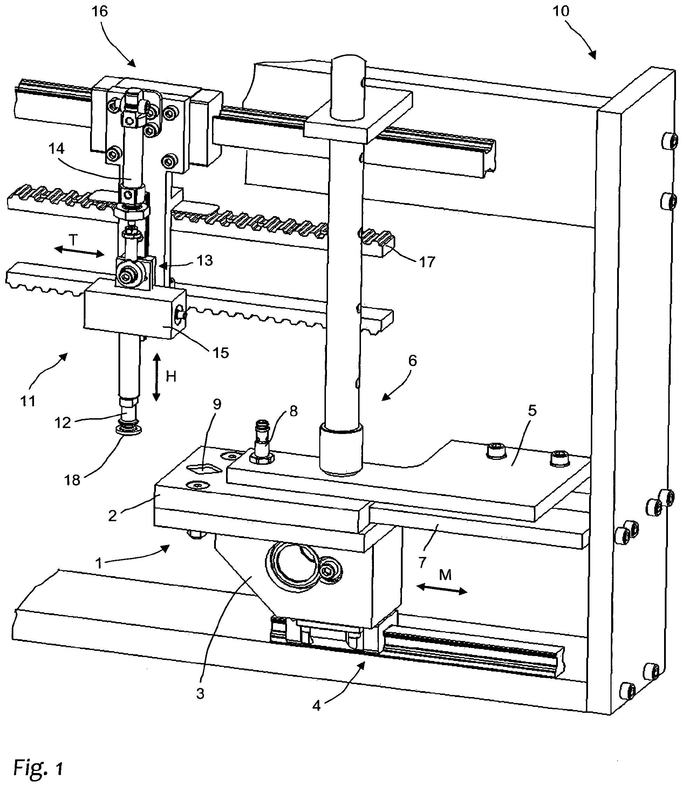

Figur 1 zeigt ein Ausführungsbeispiel einer erfindungsgemäßen Vorrichtung zum Einbringen von tablettenförmigen Magneten 18 in nicht dargestellte vorwiegend flächige Materialzuschnitte mit einem Stangenmagazin 6, welches unmittelbar aufeinander gestapelte Magnete 21 bevorratet, mit einer Vereinzelungseinrichtung 1 zum separieren einzelner Magnete 18 aus der Vorratsstange 21, und mit einer Überführungseinrichtung 11, welche den vereinzelten Magneten 18 in einer Bereitstellungsposition B aufnimmt, zu einer Aufnahmestelle des Materialzuschnittes transportiert und dort plaziert. Die genannten Einrichtungen der Vorrichtung sind über ein gemeinsames Gestell 10 miteinander verbunden.

Das Magazin 6 besteht im Wesentlichen aus einer Röhre, welche den Magnetvorrat 21 aufnimmt und in einer Durchlassöffnung 20 in der Deckplatte 5 der Vereinzelungseinrichtung 1 aufgenommen ist. Um das Nachfördern des Magnetvorrates 21 zur Vereinzelungsstelle auf einfache Weise sicherzustellen, ist das Magazin 6 vertikal ausgerichtet und besteht aus einem nichtmagnetischen Material, bspw. aus Kunststoff, mit einem Innendurchmesser der Röhre etwas größer als die Magnete 21. Das Nachfördern erfolgt dabei aufgrund der Gewichtskraft des Magnetvorrates, wobei der unterste Magnet auf dem Schlitten 2 der Vereinzelungsvorrichtung 1 aufliegt. Zur Überwachung des Füllstandes umfasst das in Figur 1 gezeigte Magazin eine Reihe von zueinander beabstandeten Bohrungen, durch welche das Vorhandensein von Magneten in den jeweiligen Füllstandshöhen beobachtet werden kann.

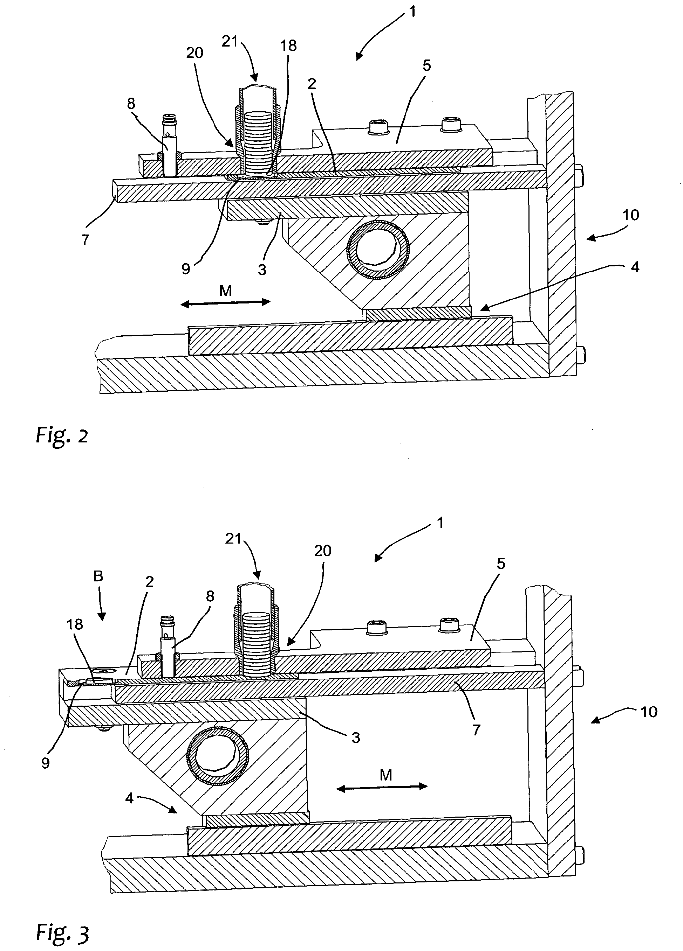

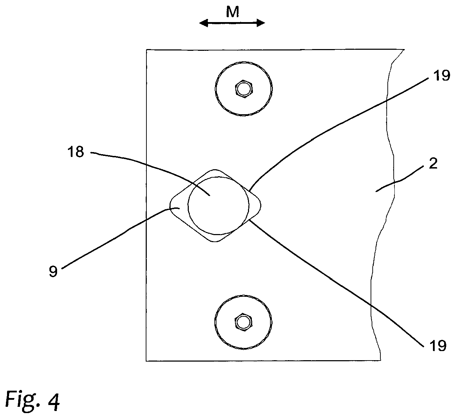

Die unterhalb des Magazins 6 angebrachte Vereinzelungseinrichtung 1 umfasst eine das Magazin 6 aufnehmende Deckplatte 5 und einen Schlitten 2, wobei beide Bauteile aus einem nichtmagnetischem Werkstoff wie bspw. Aluminium bestehen, um die Funktionssicherheit der Vereinzelungseinrichtung 1 unabhängig von der Feldstärke der verwendeten Magnete 18, 21 sicherzustellen. Der Schlitten 2 bewegt sich relativ zur ortsfesten Deckplatte 5 und ist dazu über eine Aufnahme 3 mit einer Linearführung 4 versehen. Ein schmaler Spalt zwischen der Deckplatte 5 und dem Schlitten 2 vermeidet unnötige Reibung zwischen beiden Bauteilen. Angetrieben wird der Schlitten durch nicht dargestellte, bekannte Antriebselemente, welche dem Schlitten 2 eine Hin- und Herbewegung aufprägen. Auf der dem Magazin 6 zugewandten Seite umfasst der Schlitten 2 eine Ausnehmung 9 zur Aufnahme eines einzelnen Magneten 18. In einer ersten Endlage des Schlittens 2 befindet sich die Ausnehmung 9 unter der Durchlassöffnung 20 der Deckplatte 5 und dem Magazin 6, derart dass die Durchlassöffnung 20 über deren gesamte Fläche freigegeben ist und der Magnetvorrat 21 sicher mit ihrem untersten Magneten 18 dargestellt in die Ausnehmung 9 gleitet, wie in Figur 2 dargestellt. Die Tiefe der Ausnehmung 9 und der Spalt zwischen dem Schlitten 2 und der Deckplatte 5 sind derart aufeinander abgestimmt, dass der in der Ausnehmung 9 aufgenommene Magnet 18 geringfügig aus der Kontur des Schlittens 2 herausragt, die Deckplatte 5 jedoch auch beim Verfahren des Schlittens 2 nicht berührt. In der zweiten Endlage des Schlittens 2, ist dessen Ausnehmung 9 komplett von der Deckplatte 5 freigegeben, so dass des möglich ist, den vereinzelten Magneten 18 in dieser Bereitstellungsposition B mit dem Sauger 12 der Überführungseinrichtung 11 aufzunehmen. Die Ausnehmung 9 zeigt wie in der Draufsicht der Figur 4 dargestellt im Wesentlichen eine Raute, wobei eine ihrer Diagonalen parallel zur Bewegungsrichtung M des Schlittens orientiert ist, so dass zwei Seitenflächen 19 ein sich in Bewegungsrichtung M des Schlittens 2 öffnendes "V" bilden.

Ein ferromagnetischer Balken 7 ist unterhalb der Deckplatte 5 zu dieser parallel beabstandet ortsfest angeordnet, so dass der Schlitten 2, diesen Balken 7 u-förmig umgreifend in dem Spalt zwischen der Deckplatte 5 und dem ferromagnetischen Balken 7 fährt. Der ferromagnetische Balken 7 erstreckt sich dabei von der Durchlassöffnung 20 der Deckplatte 5 bis nahezu zur Bereitstellungsposition B. Der Bereich des Balkens 7 unterhalb des Magazins 6 unterstützt durch die wirkende magnetische Kraft das Nachfördern des Magnetvorrates 21 zusätzlich zur Gewichtskraft. Der Abschluss des Balkens 7 zwischen der Deckplatte 5 und der Bereitstellungsposition B führt dazu, dass der vereinzelte Magnet 18 in seiner Bereitstellungsposition B in die dem Magazin 6 zugewandte Ecke der rautenförmigen Ausnehmung 9 gezogen und so mit sehr hoher Wiederholgenauigkeit positioniert wird.

Der den ferromagnetischen Balken 7 umgreifende Schlitten 2 ist auf einer unterhalb des Balkens 7 befindlichen ferromagnetischen Aufnahme 3 befestigt, welche insbesondere den Bereich unterhalb der Ausnehmung 9 des Schlittens 2 abdeckt und so auch bei kompakter Bauform der Vereinzelungseinrichtung 1 dazu beiträgt, dass der vereinzelte Magnet 18 in der Ausnehmung 9 verbleibt, ohne bspw. aufgrund des Magnetfeldes zwischen dem vereinzelten Magneten 18 und dem Magnetvorrat 21 aus der Bereitstellungsposition B über die Deckplatte 5 hinweg an das Magnetmagazin 6 zu springen.

Zur Überwachung der Magnetvereinzelung enthält die Vereinzelungseinrichtung 1 einen induktiven Näherungsschalter 8, welcher in Bewegungsrichtung M des Schlittens 2 zwischen der Durchlassöffnung 20 und der Bereitstellungsposition B in der Deckplatte angebracht und auf die unter ihm hindurch fahrende Ausnehmung 9 ausgerichtet ist. Verstimmt wird der mit der Steuerung der Vorrichtung verbundene Näherungsschalter 8, wenn sich ein vereinzelter Magnet 18 unter ihm befindet, nicht jedoch durch den Schlitten 2 selbst.

## Patentansprüche

1. Vorrichtung zum maschinellen Einbringen von jeweils wenigstens einem Magneten (18) in einen vorwiegend flächigen Materialzuschnitt, wenigstens umfassend
• eine Einrichtung (6) zur Aufnahme eines Vorrats von Magneten (21), welche durch ein Magazin gebildet wird, wobei das Magazin im Wesentlichen aus einer Röhre besteht, vertikal ausgerichtet ist und aus einem nichtmagnetischen Material besteht, mit einem Innendurchmesser der Röhre etwas größer als die Magnete (21),
• eine Einrichtung (11) zum Überführen des wenigstens einen Magneten (18) aus einer Bereitstellungsposition (B) in eine Aufnahmeposition des vorwiegend flächigen Materialzuschnittes sowie
• eine Einrichtung (1) zum Vereinzeln des wenigstens einen Magneten (18) aus dem Vorrat von Magneten (21) und zum Überführen des wenigstens einen Magneten (18) in die Bereitstellungsposition (B), wenigstens umfassend
• eine Deckplatte (5) mit wenigstens einer Durchlassöffnung (20) für die Magnete (18) sowie
• einen in einer zu der Deckelplatte (5) parallelen Ebene verschiebbaren Schlitten (2) mit wenigstens einer der wenigstens einen Durchlassöffnung (20) zugeordneten, einen einzelnen Magneten (18) aufnehmenden Ausnehmung (9), wobei die Deckplatte (5) und der Schlitten (2) aus nichtmagnetischem Material bestehen,
• **gekennzeichnet durch** ein ortsfestes ferromagnetisches Element, welches beabstandet zu der Deckplatte (5) derart angeordnet ist, dass sich der Schlitten (2) zwischen der Deckplatte (5) und dem ferromagnetischen Element befindet und sich das ferromagnetische Element in Bewegungsrichtung (M) des Schlittens (2) von der Durchlassöffnung (20) der Deckplatte (5) bis nahezu zur Bereitstellungsposition (B) erstreckt, wobei das ferromagnetische Element der Durchgangsöffnung (20) gegenüberliegend angeordnet ist.

2. Vorrichtung nach Anspruch 1, **gekennzeichnet durch** eine Bereitstellungsposition (B) des wenigstens einen Magneten (18), in welcher die den Magneten (18) aufnehmende Ausnehmung (9) von der Deckplatte (5) vollständig freigegeben ist.

3. Vorrichtung nach Anspruch 1 oder 2, **dadurch gekennzeichnet, dass** der Schlitten (2) auf einem Träger angeordnet ist, welcher das ortsfeste ferromagnetische Element umfasst, wobei der Träger wenigstens im Bereich der den Magneten (18) aufnehmenden Ausnehmung (9) ferromagnetisch ist.

4. Vorrichtung nach einem der Ansprüche 1 bis 3, **dadurch gekennzeichnet, dass** die einen Magneten (18) aufnehmende Ausnehmung (9) des Schlittens (2) wenigstens zwei sich in Bewegungsrichtung (M) des beladenen Schlittens (2) öffnende Seitenflächen (19) als Anlageflächen für jeweils einen vereinzelten Magneten (18) umfasst.

5. Vorrichtung nach Anspruch 4, **dadurch gekennzeichnet, dass** die seitlichen Anlageflächen (19) ein "V" bilden.

6. Vorrichtung nach einem der Ansprüche 1 bis 5, **dadurch gekennzeichnet, dass** das ferromagnetische Element durch einen ferromagnetischen Balken (7) gebildet wird.

7. Vorrichtung nach einem der Ansprüche 1 bis 6, **gekennzeichnet durch** eine Hin- und Herbewegung des Schlittens (2) in Bewegungsrichtung (M) mit einer Endlage, in welcher die den wenigstens einen Magneten (18) aufnehmenden Ausnehmung (9) der Durchlassöffnung (29) der Deckplatte (5) gegenüber liegt, bis zu einer zweiten Endlage, in der die Ausnehmung (9) die Bereitstellungsposition (B) erreicht hat.

8. Vorrichtung nach einem der Ansprüche 1 bis 7, **gekennzeichnet durch** einen Sensor (8) zur Detektion vereinzelter Magnete (18).

9. Vorrichtung nach Anspruch 8, **gekennzeichnet durch** eine Anordnung des Sensors (8) im Bereich der Deckplatte (5).

## Claims

1. A device for respectively introducing at least one magnet (18) into a predominantly flat precut material, comprising at least
• a device (6) for accommodating a supply of magnets (21), which is formed by a magazine, wherein the magazine is essentially realized in the form of a tube, aligned vertically and made of a nonmagnetic material, and wherein the inside diameter of the tube is slightly larger than the magnets (21),
• a device (11) for transferring the at least one magnet (18) from a supply position (B) into a receiving position of the predominantly flat precut material, as well as
• a device (1) for individualizing the at least one magnet (18) from the supply of magnets (21) and for transferring the at least one magnet (18) into the supply position (B), comprising at least
• a cover plate (5) with at least one passage opening (20) for the magnets (18), as well as
• a slide (2) that can be displaced in a plane extending parallel to the cover plate (5) and features at least one recess (9), which is assigned to the at least one passage opening (20) and accommodates one individual magnet (18), wherein the cover plate (5) and the slide (2) consist of nonmagnetic material,
• **characterized by** a stationary ferromagnetic element, which is spaced apart from the cover plate (5) and arranged in such a way that the slide (2) is located between the cover plate (5) and the ferromagnetic element and the ferromagnetic element extends in the moving direction (M) of the slide (2) from the passage opening (20) of the cover plate (5) up to just about the supply position (B), wherein the ferromagnetic element is arranged opposite of the passage opening (20).

2. The device according to claim 1, **characterized by** a supply position (B) of the least one magnet (18), in which the recess (9) accommodating the magnet (18) is completely exposed by the cover plate (5).

3. The device according to claim 1 or 2, **characterized in that** the slide (2) is arranged on a carrier, which comprises the stationary ferromagnetic element, wherein the carrier is ferromagnetic at least in the region of the recess (9) accommodating the magnet (18).

4. The device according to one of claims 1 to 3, **characterized in that** the recess (9) of the slide (2), which accommodates the magnet (18), comprises at least two lateral surfaces (19) that open in the moving direction (M) of the loaded slide (2) and respectively serve as contact surfaces for one individualized magnet (18).

5. The device according to claim 4, **characterized in that** the lateral contact surfaces (19) form a "V."

6. The device according to one of claims 1 to 5, **characterized in that** the ferromagnetic element is formed by a ferromagnetic beam (7).

7. The device according to one of claims 1 to 6, **characterized by** a reciprocating motion of the slide (2) in the moving direction (M) between an end position, in which the recess (9) accommodating the at least one magnet (18) lies opposite of the passage opening (29) of the cover plate (5), and a second end position, in which the recess (9) has reached the supply position (B).

8. The device according to one of claims 1 to 7, **characterized by** a sensor (8) for detecting individualized magnets (18).

9. The device according to claim 8, **characterized by** an arrangement of the sensor (8) in the region of the cover plate (5).

## Revendications

1. Dispositif pour l'introduction mécanisée de chaque fois au moins un aimant (18) dans un coupon de matière majoritairement plan, comprenant au moins
• un système (6) destiné à recevoir un stock d'aimants (21), lequel est formé par un magasin, le magasin étant sensiblement constitué d'un tube, étant orienté à la verticale et étant constitué d'une matière non magnétique, avec un diamètre intérieur du tube légèrement supérieur à celui des aimants (21),
• un système (11) destiné à faire passer l'au moins un aimant (18) d'une position de mise à disposition (B) dans une position de reprise du coupon de matière majoritairement plan et
• un système (1) destiné à désolidariser l'au moins un aimant (18) du stock d'aimants (21) et à faire passer l'au moins un aimant (18) dans la position de mise à disposition (B), comprenant au moins
• une plaque de recouvrement (5) avec au moins un orifice de passage (20) pour les aimants (18) et
• un chariot (2) déplaçable dans un plan parallèle à la plaque de recouvrement (5) avec au moins un évidement (9) associé à l'au moins un orifice de passage (20) réceptionnant un aimant (18) isolé, la plaque de recouvrement (5) et le chariot (2) étant constitués d'une matière non magnétique,
• **caractérisé par** un élément ferromagnétique stationnaire, lequel est placé avec un écart par rapport à la plaque de recouvrement (5), de telle sorte que le chariot (2) se trouve entre la plaque de recouvrement (5) et l'élément ferromagnétique et que l'élément ferromagnétique s'étende dans le sens de déplacement (M) du chariot (2) de l'orifice de passage (20) de la plaque de recouvrement (5) pratiquement jusqu'à la position de mise à disposition (B), l'élément ferromagnétique étant placé à l'opposée de l'orifice de passage (20).

2. Dispositif selon la revendication 1, **caractérisé par** une position de mise à disposition (B) de l'au moins un aimant (18), dans laquelle l'évidement (9) réceptionnant l'aimant (18) est totalement libéré par la plaque de recouvrement (5).

3. Dispositif selon la revendication 1 ou 2, **caractérisé en ce que** le chariot (2) est placé sur un support qui englobe l'élément ferromagnétique stationnaire, le support étant ferromagnétique, au moins dans la zone de l'évidement (9) réceptionnant l'aimant (18).

4. Dispositif selon l'une quelconque des revendications 1 à 3, **caractérisé en ce que** l'évidement (9) du chariot (2) réceptionnant un aimant (18) comprend deux surfaces latérales (19) s'ouvrant dans le sens de déplacement (M) du chariot (2) chargé en tant que surfaces d'appui pour chaque fois un aimant (18) désolidarisé.

5. Dispositif selon la revendication 4, **caractérisé en ce que** les surfaces d'appui (19) latérales forment un « V ».

6. Dispositif selon l'une quelconque des revendications 1 à 5, **caractérisé en ce que** l'élément ferromagnétique est formé par une barre (7) ferromagnétique.

7. Dispositif selon l'une quelconque des revendications 1 à 6, **caractérisé par** un déplacement aller et retour du chariot (2) dans le sens de déplacement (M) d'une position finale dans laquelle l'évidement (9) réceptionnant l'au moins un aimant (18) est opposé à l'orifice de passage (29) de la plaque de recouvrement (5) jusqu'à une deuxième position finale dans laquelle l'évidement (9) a atteint la position de mise à disposition (B).

8. Dispositif selon l'une quelconque des revendications 1 à 7, **caractérisé par** un capteur (8) pour la détection d'aimants (18) désolidarisés.

9. Dispositif selon la revendication 8, **caractérisé par** une disposition du capteur (8) dans la zone de la plaque de recouvrement (5).
